# EUROPEAN PATENT SPECIFICATION

(11) **EP 3 388 969 B1**
(45) Date of publication and mention of the grant of the patent: **16.10.2019**
(21) Application number: 18166222.2
(22) Date of filing: 09.04.2018
(51) Int. Cl.: G06F 16/22

(54) **SEARCH SYSTEM**
SUCHSYSTEM
SYSTÈME DE RECHERCHE

(30) Priority: 13.04.2017 EP 17166553
(43) Date of publication of application: 17.10.2018
(73) Proprietor: DSwiss AG, 8003 Zürich (CH)
(72) Inventor: GERMANN, Fabio, 8156 Oberhasli (CH); TSCHANNEN, Michael, 8500 Frauenfeld (CH); PAGANONI, Sergio, 3472 Wynigen (CH)
(74) Representative: Liebetanz, Michael

(56) References cited:
- US-A1- 2005 004 924
- US-A1- 2014 101 438
- US-A1- 2016 299 924

## Description

### TECHNICAL FIELD

The present invention relates to a search system comprising a storage device, a search server, wherein the storage device comprises a file storage, an index storage, a document key database, an index database and a user/key database.

### PRIOR ART

Storage services can be provided locally or as a cloud service. Storage services usually store document data uploaded by users and enable the users and user groups who are given permission by the users to share the document data. Document management systems (DMS) are often integrated within such storage services and should provide full-text search which searches document data including keywords.

Security considerations request that the data is stored as encrypted data. Then, it will be necessary to implement search strategies on these encrypted data. In the framework of cloud services, a plurality of users share servers and storage space. Thus, storage including one user's document data may be part of a search inquiry, even if the user's data is not the target of such a search. It is then necessary to take measures to prevent confidential information from leaking out. One such proposal with the features of the preamble of claim 1 is disclosed in US 2016 / 0 299 924 A1. Said prior art document provides, in typical Internet usage environment, functions searching data on storage of cloud service providers with the data encrypted.

A search system according to US 2016 / 0 299 924 A1 comprises: a storage device configured to store a document and an index which are encrypted with a searchable format; and a search server configured to search data stored in the storage device, wherein the storage device configured to store: an index database storing an encrypted index, which is an index encrypted with an index key, and an encrypted index key, which is the index key encrypted with a user key, associated with the encrypted index; and a document database storing an encrypted document, which is the document encrypted with a document key, and an encrypted document key, which is the document key encrypted with the user key, associated with the encrypted document, wherein the search server is configured to extract a term for search from a requested search query, decrypt the encrypted index key with a user key which belongs to a user requesting the search query, encrypt the extracted term with the decrypted index key without storing the decrypted index key in a non-transitory storage device, search the index database with the index encrypted using the encrypted term, and send a search result to a terminal.

US 2016 / 0 299 924 A1 further discloses a system to add documents to an existing encrypted document database, wherein the search server is configured to extract a term from the document, which is requested to be recorded, encrypt the term extracted from the document with the index key, encrypt the index key with a user key which belongs to a user requesting to record the document to be recorded, record the encrypted term extracted from the document and the encrypted index key in the index database, encrypt the document to be recorded with the document key, encrypt the document key with the user key which belongs to the user requesting to record the document, and record the encrypted document and the encrypted document key in the document database.

US 2016 / 330 180 relates to a zero-knowledge encrypted database, where encryption keys are withheld from the system storing the database.

US 2016 / 379 009 discloses a privacy enhanced personal search index where the database storing documents, especially in the cloud, stores encrypted documents and is capable to use opaque search queries to access the encrypted documents.

US 2017 / 091 475 relates to a method for searching encrypted data on an untrusted server through a local file index with search values that occur in at least one encrypted file on said untrusted server.

US 2008 / 059414 discloses an encrypted data search with a calculation of an indexing value which is used within an indexing structure to find an item corresponding to the indexing value based on the E-value corresponding to the found item.

US 2005/004924 discloses a database system comprising an encrypted index and a secure component capable of manipulating said encrypted index.

### SUMMARY OF THE INVENTION

The prior art documents provide a secure approach to searching encrypted documents. However, such an approach does only allow extracting/searching keywords from a document, but prevents "advanced search features" including but not limited to semantic searches. One of the main objects of the present invention is to provide a search system comprising an encrypted database within which it is possible to conduct arbitrary search approaches/features. Semantic search considers - inter alia - various points including context of search, location, intent, variation of words, synonyms, generalized and specialized queries, concept matching and natural language queries to provide relevant search results. Further elements relating to semantic search can be found in an article entry by Tony John "What is Semantic Search and how it works with Google search" from 15-Mar-2012 on Techulator under http://www.techulator.com/resources/5933-What-Semantic-Search.aspx. The main difference between the prior art documents and the present invention is the way a search is conducted: While the prior art documents search an encrypted term on an encrypted index, the present invention searches a plaintext term on a partially decrypted index. The present invention describes an index encryption approach which technically allows such an advanced search feature as is a semantic search. The invention is defined by the features of the independent claims. Further embodiments are the subject-matter of the dependent claims.

In this respect a further object of the present invention is to provide an update system for the encrypted database and further database elements while maintaining the semantic search approach.

A search system according to the invention comprises a storage device and a search server configured to search data stored in the storage device. The storage device comprises a file storage configured to store at least one document, wherein the storage device comprises: a file storage configured to store at least one document, an index storage configured to store at least one index, each of those associated or related to at least one document, a document key database configured to store at least one document key associated to one document in the file storage and wherein the document key is used to encrypt and decrypt the associated document, an index database configured to store at least one index key, associated to the at least one index in the index storage and wherein the index key is used to encrypt and decrypt the associated index and a user key database configured to store at least one user key. Each user key is associated to at least one index key and to at least one document key through using the respective user key to encrypt and decrypt the associated index keys in the index database as well as the associated document keys in the document database.

Then the search server is configured to extract one or more terms for a search from a requested search query, *to* decrypt the encrypted index key with the user key which belongs to the user requesting the search query, *to* search one or multiple node sequences/trees in the index database, hierarchically decrypt the nodes and send a search result to a terminal.

Therefore, the encrypted index comprises at least one index tree comprising a sequence of interconnected nodes each encrypted individually, and comprising the index reference information as well as information relevant to interconnected child nodes.

The index storage usually stores a plurality of indices, each of those being associated to at least one document, i.e. each index is able to store information about one to many documents.

The present application uses the term "tree node encryption". Tree node encryption refers to a tree being encrypted on a node-basis, i.e. each tree-node is encrypted individually, with an arbitrary encryption algorithm. A further feature definition is related to "node-based encryption". This feature is related to "information encrypted in such a way that node-based decryption is possible". Relevant information about child nodes (and potentially neighboring nodes) is thereby stored in the information of the parent node. With that, it is possible to travers a tree consisting of encrypted nodes, without the need to decrypt the full tree. Given that the information about the next traversal step is contained in the parent node, the system is able to decrypt only relevant nodes, in order to perform a tree traversal. That said, a search process will only reveal as much information as necessary to fulfill the query, and not expose all information which is stored in the index.

Alternatively, the information can also be kept in the child nodes, which would lead to "level-based decryption" instead of node-based decryption or a combination thereof. Similarly to node-based decryption refers to child nodes decryption, level-based decryption relates to sideway decryption. Technically spoken, the amount of decrypted information is the same in both cases what changes is the order in which the tree is traversed and decrypted.

A leaf is a child node in the tree providing the requested information. Such a leaf can also point to another different index instead of a document. It can also reference part of a matching document. Of course, every index can have several trees.

A node is represented by an arbitrary datastructure, which can for example (but not limited to) be an array, a list, a hashmap, or any other datastructure known in information technology. The tree is hereby defined as a way to interconnect the said portions of data.

Then, it is an advantage when each node comprises one or more references onto matching connected nodes and/or leafs, since the decryption stage during a search is only related to a number of these nodes which are decrypted on an individual basis, compared to a specific search term, and if the comparison is successful, the information about interconnected neighbours or child nodes contained within the decrypted node is used to find the next index node to be decrypted. If the search is completed, the documents mentioned in the last node, being a leaf for a positive match, are forwarded as answer result for the search query.

To enhance the quality of a search, other indexes and sub-indexes may be consulted to obtain additional information to precise and enrich the search. This also applies to the index process, which might update more than one index for one document.

The search system comprises an index structure allowing node and level-based decryption, thus allowing to - for security and privacy advantages - only have to decrypt relevant parts (instead of decrypting the whole index) of the index in order to execute a search, wherein in such an index structure each tree node contains index information and references to other nodes, child nodes, and leaf nodes which contain references to matching document(s), other indexes and search metadata.

The search result as defined in the present context comprises in the simplest embodiment documents as such. Since the internal details of the presentation of a search result can differ across products, and can especially comprise pointers to documents on the file system (i.e. what the user usually actually wants), plus supporting meta data which can improve a search result display, such as a search result position in the document. The search result can provide a matching document on the file storage, as well as pointers to other indexes and/or to search metadata such as parts of the index.

The system preferably comprises an index structure allowing node and level-based decryption. Such an index structure is known in the art. The present invention works with a variety of index structures, which are the basis for the invention to work properly, i.e. storing information in a tree, with information about child nodes being stored in the parent node. For example, Lucene is working like this: see https://lucene.apache.org/. The invention then allows to only decrypt relevant parts of the index in order to execute a search, wherein each tree node contains index information and references to other nodes, child nodes, and leaf nodes which contain references to matching document(s), other indexes and search metadata.

Further embodiments of the invention are laid down in the dependent claims.

### BRIEF DESCRIPTION OF THE DRAWINGS

Preferred embodiments of the invention are described in the following with references to the drawings, which are for the purpose of illustrating the present preferred embodiments of the invention and not for the purpose of limiting the same. In the drawings,
- Fig. 1: shows a block diagram of a document store and search system according to an embodiment of the invention;
- Fig. 2: shows the store and search system according to Fig. 1;
- Fig. 3: shows the approach of processing documents stored and accessed by two users A and B;
- Fig. 4: shows the approach of processing documents stored and accessed by two groups of users A, B as well as A, C;
- Fig. 5: shows a decision tree of the document store and search system according to Fig. 1;
- Fig. 6: shows a node tree of the index accessed by the search engine and how the document store and search system according to Fig. 1 applies the node-based decryption according to Fig. 5;
- Fig. 7: shows an application of the initiator of Fig. 1;
- Fig. 8A & B: show a flowchart of the indexing process for a new document in the store and search system according to Fig. 1 in two connected sheets; and
- Fig. 9: shows a flowchart of the search process in the store and search system according to Fig. 1.

### DESCRIPTION OF PREFERRED EMBODIMENTS

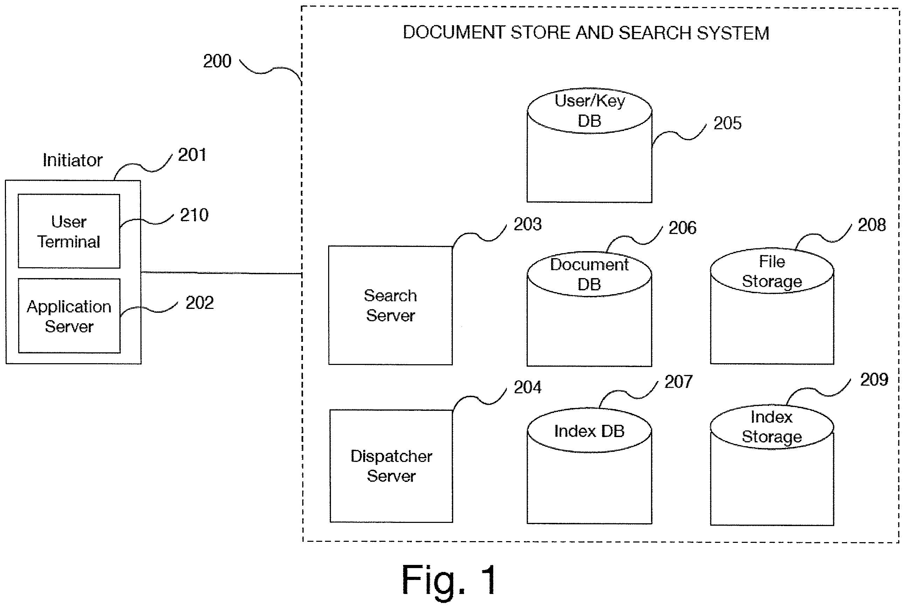

Fig. 1 shows a block diagram of a document store and search system according to an embodiment of the invention. The document store and search system 200 comprises a user and key database 205, a document database 206, an index database 207, a file storage 208 and an index storage 209. The document store and search system 200 is controlled via a search server 203 and a dispatcher server 204. The document store and search system 200 can be prompted by an initiator 201 which can either be a user terminal 210 or an application server 202.

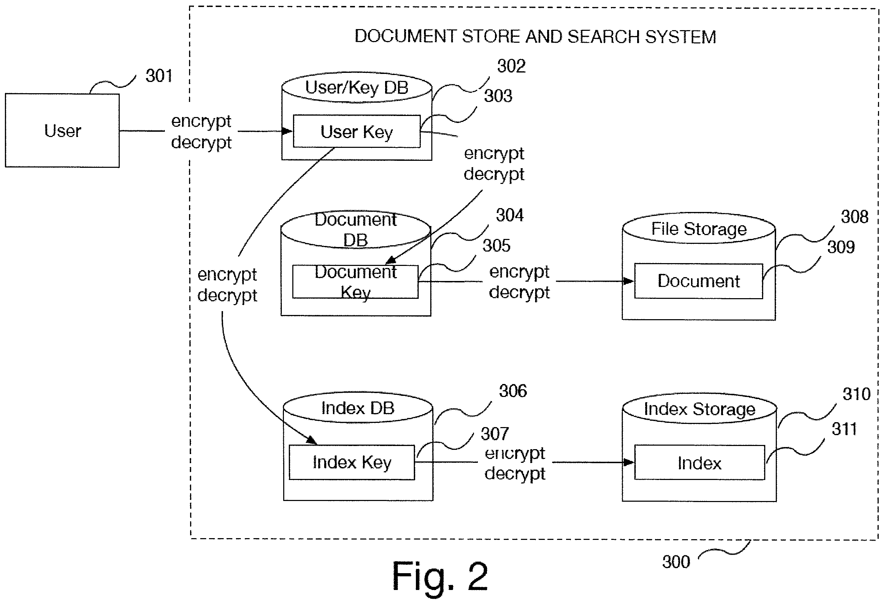

Fig. 2 shows the store and search system 300 according to Fig. 1, referenced as 200 there. Nevertheless, only partly similar reference numerals are attributed since other approaches of the user terminal 210 are possible. The document store and search system 300 comprises a known computer system having a user and key database 302 storing a plurality of encrypted user keys 303 (note that user keys can also be stored unencrypted, which has no effect on the present invention). A document database 304 is provided having a plurality of encrypted document keys 305 pointing to encrypted documents 309 in the file storage 308. Finally, an index database 306 comprises a plurality of encrypted index keys 307 pointing to encrypted indexes 311 in the index storage 310. In the additional storage part of the computer system, the file storage 308 comprises and stores a plurality of documents 309, which can have a variety of formats. Documents comprise at least partially a searchable part of words or keywords. The index storage 310 comprises at least one index 311.

A user can contact the store and search system 300 with a user terminal 301. This can be a local keyboard and screen or a remote login or other means allowing for lodging a search request.

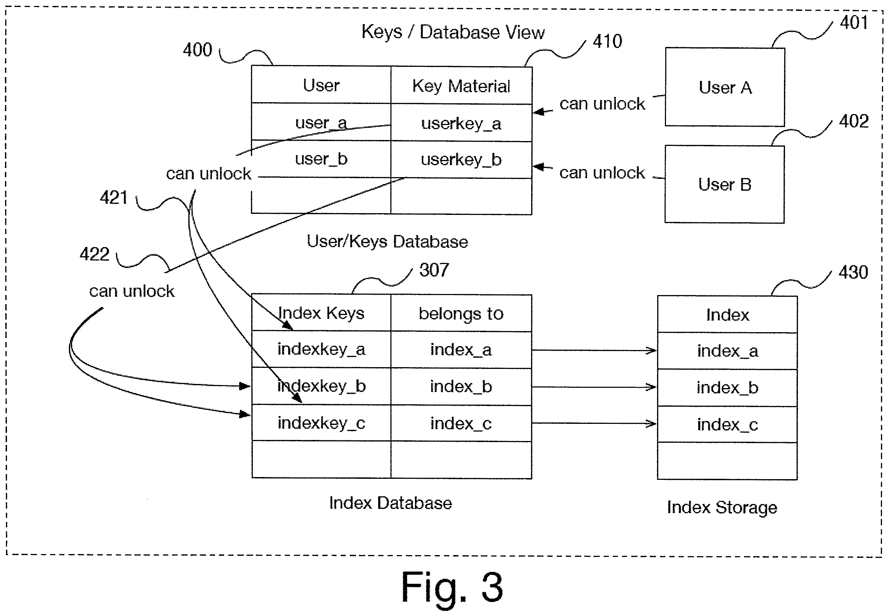

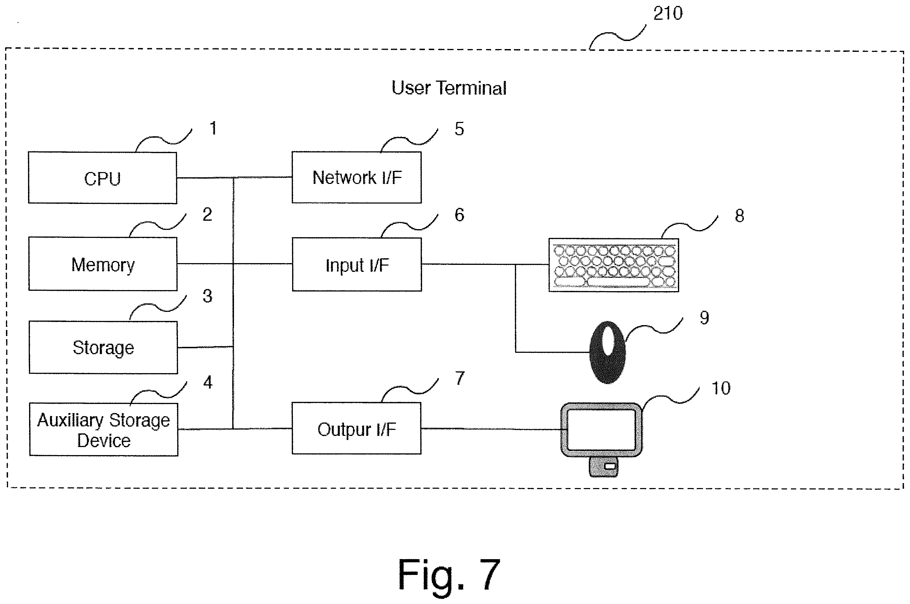

Fig. 3 shows the approach of handling documents as stored in a store and search system 200 or 300 according to Fig. 1 or 2 and accessed by two users A and B, using instances 402/401 or a terminal 210 (Fig. 1/7), respectively.

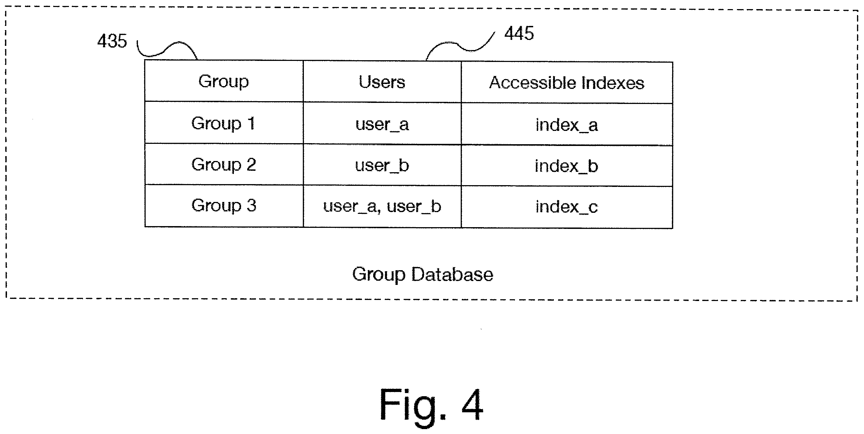

In the below explanation, the document is either processed to enable a single person or user as explained in connection with Fig. 3 or persons as members of a group of users as explained in connection with Fig. 4 to search for and retrieve a document.

In the keys/database view of Fig. 3, there are users 400 and associated key material 410. For the sake of simplicity, the drawing is related to two users A and B accessing the system with terminals 401 and 402, respectively. Before interacting with the search system 200 or 300, the client (here user A and user B) authenticates himself with his password or an alternative authentication mechanism to unlock his key material. Then user A has access to userkey_a and user B has access to userkey_b. This can be done using the terminal with a web-browser or another computer system that acts on the user's behalf. In other words, the user A and user B access the user/keys database, authenticate themselves as user_a or user_b with their usual password plus eventually a 2- or 3-factor authentification and unlock their userkey_a and userkey_b, respectively. Having completed this step successfully, the user A and the user B receive a respective token and/or a secret. The token and/or a secret is not materialized as such in Fig. 3 but associated to the unlock arrows 421 and 422, respectively.

The index database 306 comprises a plurality of encrypted index keys 307 and associated authorized encrypted indexes 430 which are stored in the index storage. The example with two users user_a and user_b provides the following situation. Token 421 of user_a is capable to access and unlock userkey_a, which is capable to unlock indexkey_a, belonging to index 430 index_a for user_a as well as indexkey_c, belonging to index_c stored for more than one user (user group), here for user_a and user_b. Of course, the index database 306 comprises further index keys 307 for corresponding indexes in the index storage 430, for either user_a, user_b and/or other users as well as user groups.

The index storage 310 comprises a plurality of indexes 430. The example with two users A and B provides the following situation. Userkey_a 421 of user A is capable to access and unlock index keys (indexkey_a and indexkey_c) providing access to index a, belonging to documents only stored for user A as well as index c, belonging to documents stored (in the present example) for a group comprising of user A and user B.

Fig. 4 shows the approach of handling groups of users user_a and user_b; The index database is complemented by a group database, where groups can contain one or more user. In the present example, user A is member of both an "implicit group" (Group 1, which is only "user_a", having access to his personal index) and an explicit group Group 3, which allows access to a shared index together with user_b. There will be of course groups, for which user_a does not have an authorization.

Each explicit and implicit group has basically one index, and one index key belonging to this index. In other words, a "group" (which consists of at least one user) has access to at least one document, which is covered in a distinct index which can be accessed by the "group", via index key. Said index key can therefore be unlocked by all the user keys of users being member of a group.

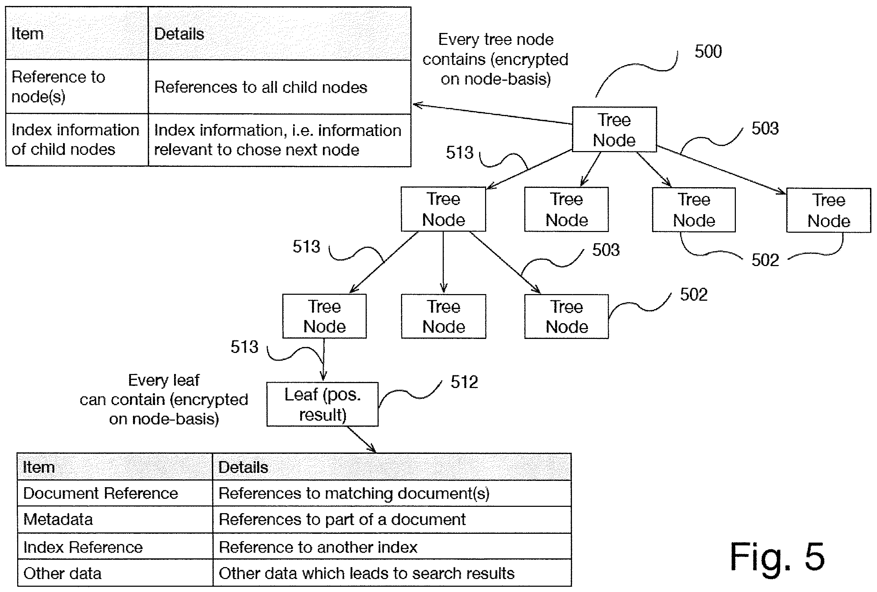

Fig. 5 shows a tree 500 of the document store and search system 200 or 300, and describes how index information is stored. The tree comprises a plurality of tree nodes 502. Every tree node comprises references to neighbouring nodes and or child nodes, visualized by node connection arrows 503 as well as 513. This relates to references to all child nodes and information relevant to choose the next node. A search string comprises several key words will identify one key word after the other and thus following the node chain along specific node connection arrows 513 leading to a positive result, called leaf node 512. Each leaf node 512 contains either a direct document reference having a list of references to matching documents or part of a reference document as metadata, to an index reference or simply to other data. In fact, this is true for every node 502 which can be the last of a chain of nodes with the respective keyword combination.

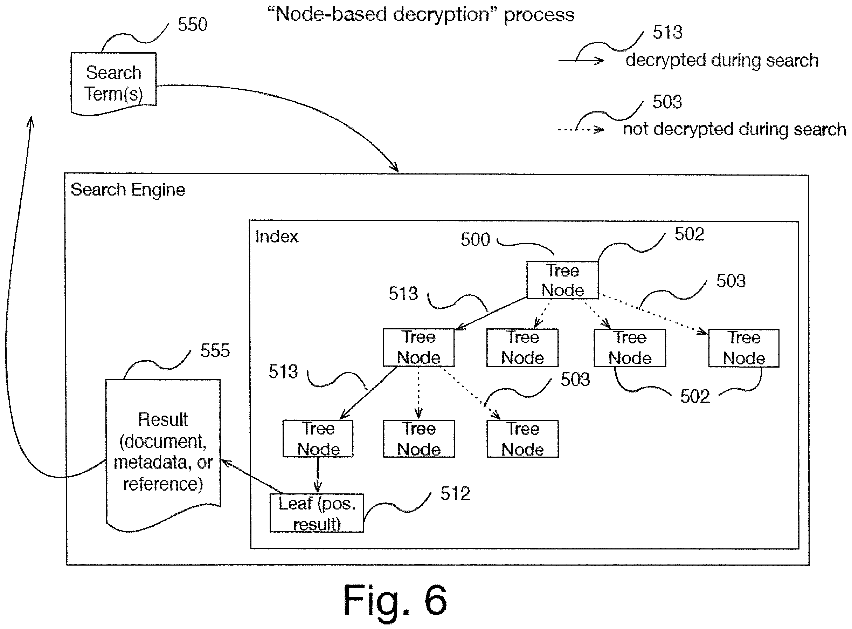

Fig. 6 shows a tree 500 of the document store and search system 200 or 300, and describes how information is processed during a search process. The user 400 (from Fig. 3) authenticated himself at the document store and search system, unlocked his key material 410 and has thus access to indexes 430 belonging to documents wherein the user has access to the document. This access can be restricted to reading, it can also be an access for amending or deleting the document, or adding further users. The user then provides a search term 550. A search term 550 comprises a number of keywords or more generally a number of possible data entries in the accessible index 311 of index storage 309. The term "accessible" relates to the group membership / access rights shown exemplary shown in Fig. 4. The search term 550 can also comprise part of a word, a formula or an image as data entry; comprise defined formatting elements according to the rules of the database related to possible data entries.

According to the invention the first key word is applied in the index 430 finding a first tree node which is decrypted. There is not necessarily a 1:1 relationship between "keyword" and "node", nodes can also contain parts (e.g. the first character, or parts of the keyword) of a keyword. Also, they may contain not only one character, part of a word or complete word but rather a collection of characters or words. Then the search engine decrypts one node 502 of the next layer or a neighbour node whereas the other three tree nodes on the same level remain un-decrypted. This procedure is repeated for each layer, wherein only one node is decrypted until the leaf node 512 is reached. Since the relevant document information is stored together with a node, here leaf node 512, the search result 555 is transmitted back to the inquiring user. As mentioned above the search result can be one or more document reference(s) as well as metadata, semantic relevant data or a reference to other data sources.

Fig. 7 shows a user terminal 210. This can be a computer with a CPU 1, a memory 2, a storage 3 and an auxiliary storage device 4. Usually, a network interface 5 is integrated and there is provided an input interface 6 and an output interface 7. The output interface 7 is connected with a screen 10, whereas the input interface 6 is connected with a keyboard 8 and/or a computer mouse 9. The user terminal triggers the initiator 201 of Fig. 1 which is always an application server 202. The user initiates a search via user terminal 210, which is then forwarded to the application server 202 and to the search system.

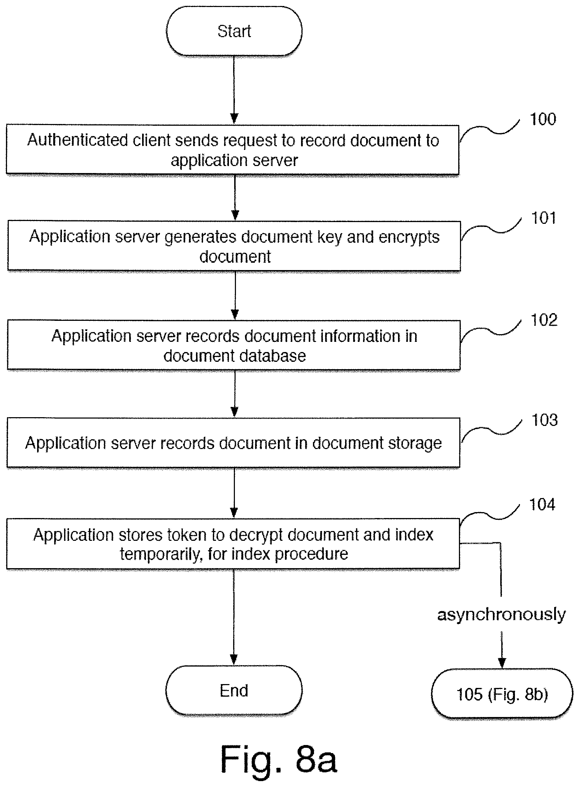

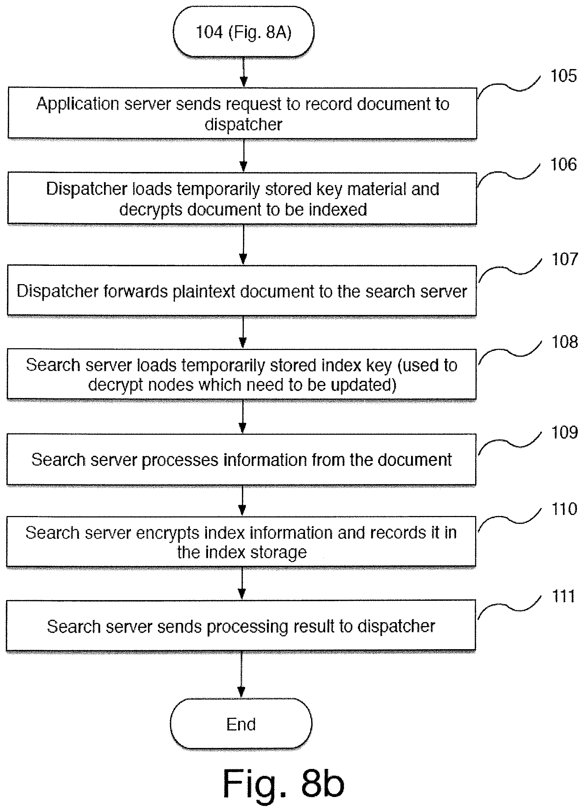

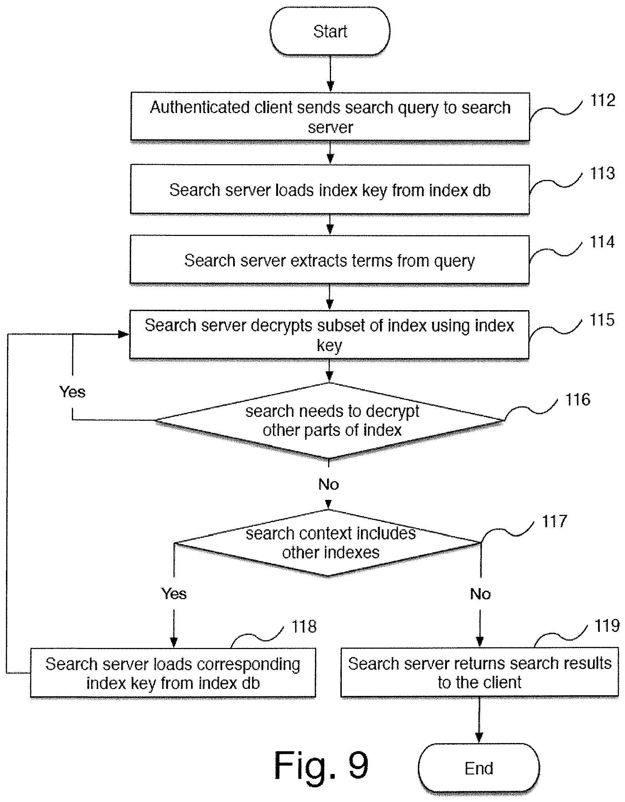

Fig. 8a and Fig. 8b shows a flowchart of a recordal in the store and search system according to Fig. 1; Fig. 9 shows a flowchart of the search in the store and search system according to Fig. 1.

The procedure of recordal of a document starts with the authentication of a user willing to enter a new document into the file storage 208 and into the database 206.

An authenticated client, which is mapped to "a user" in the system, sends a request to record a document 309 to the application server 202 (which is, for the indexing procedure later, "the initiator"). The application server 202 generates a document key 305 and encrypts the document with the document key 305. The application server 202 records document information and document keys 305 in the document database 206; 304 and stores the document information as document 309 in the file storage 208; 308. Finally, the application server 202 stores a token to decrypt the document 309 and the index associated or related to this document (for simplicity reasons, no reference to Fig. 3 and Fig. 4 are added here) which are then used for the subsequent indexing procedure.

The application server sends a request to record the document to the dispatcher server 204. This happens asynchronously, i.e. independent of the document storage procedure. The dispatcher server 204 prepares the document to be recorded. This may involve loading additional information in regard to the document and/or the index as well as preprocessing the document itself. Besides that, the dispatcher server 204 is granting access to the relevant key material to the search server 203. This is necessary to index the document later in the process. In other words, the search server 203 needs to decrypt both the index to be updated, as well as the (stored, encrypted) document to be indexed. One way to achieve this (but not limited to) is by storing a copy of the index key, as well as the document key, encrypted with an application key which is accessible to the search server. The dispatcher server 204 loads the temporarily stored document key 305 and decrypts the document 309 to be indexed. The dispatcher server prepares the document to be indexed and forwards it to the search server 203. The search server 203 loads the temporarily stored index key 307 from the index database 306. The stored index key 307 is used to decrypt nodes of the associated index which need to be updated. The search server 203 extracts text from the document 309, executes language analysis referring to a dictionary including semantic keywords and terms, and obtains terms and positions of the terms. Further, the search server 203 may obtain and include a plurality of terms, preceding and/or succeeding terms, execute a specific language analysis based on the recognized language of the document 309. Furthermore, the search server 203 may additionally obtain information for determining search-result rank, such as frequencies of the terms and other information which can be extracted and recorded using language related processing of the document.

The search server then updates different index information 311, encrypts index information 311 for this document in relation to different index keys 307 and records it in the index storage 310. Once the index is updated, the temporary access to the index key is thrown away (i.e. token is dropped). The search server sends processing result to the dispatcher and ends the handling of the newly recorded document. It is preferred that an inverted index is used for the preparation of the index database.

The retrieval of recorded documents will be explained in connection with the disclosure of Fig. 9. The authenticated client user sends a search query comprising search terms 550 to the search server 203. The search server loads the index key 307 from the index database 306. The loaded index key 307 is the allowed index key for all documents available to this user.

The search server extracts all terms from the query, i.e. the search query, comprising a number of keywords, is separated into a list of different keywords which are arranged in a predetermined manner as usual of the handling of search queries.

Then the search server decrypts a subset / first node of the index 311 using the index key 307. The search server checks if all the search has already revealed a positive result (114). If no, then the search server goes back to the decryption stage 115 in order to decrypt the next node. Otherwise, the search server evaluates if the search context includes other indexes. If yes, then the search server goes back to the initial decryption stage 115. Otherwise, the search server returns the search results 117 to the client and ends the query.

**LIST OF REFERENCE SIGNS**

| | | | |
|---|---|---|---|
| 1 | CPU | 305 | document key |
| 2 | memory | 306 | index database |
| 3 | storage | 307 | index key |
| 4 | auxiliaary storage device | 308 | file storage |
| 5 | network interface | 309 | document |
| 6 | input interface | 310 | index storage |
| 7 | output interface | 311 | index |
| 8 | keyboard | 400 | user |
| 9 | computer mouse | 401 | user A |
| 10 | screen | 402 | user B |
| 200 | document store and search system | 410 | key material |
| 201 | initiator | 411 | key material of user A |
| 202 | application server | 412 | key material of user B |
| 203 | search server | 421 | token of user A |
| 204 | dispatcher server | 422 | token of user B |
| 205 | user and key database | 430 | indexes |
| 206 | document database | 435 | group indexes |
| 207 | index database | 440 | associated authorization entry |
| 208 | file storage | 445 | user member of groups |
| 209 | index storage | 500 | decision tree |
| 210 | user terminal | 502 | tree node |
| 300 | document store and search system | 503 | node connection arrow |
| 301 | user terminal | 512 | leaf node |
| 302 | user and key database | 513 | node connection arrow |
| 303 | user key | 550 | search term |
| 304 | document database | 555 | result document reference |

## Claims

1. A search system (200, 300) comprising:
- a storage device (205, 206, 207, 208, 209; 302, 304, 306, 308, 310); and
- a search server (203) configured to search data stored in the storage device,
wherein the storage device (205, 206, 207, 208, 209; 302, 304, 306, 308, 310) comprises:
- a file storage (208; 308) configured to store at least one document (309),
- an index storage (209; 310) configured to store at least one index (311) each of those associated to at least one of the at least one document (309),
- a document key database (206; 304) configured to store at least one document key (305) associated to the at least one document (309) in the file storage (208; 308) and wherein the document key (305) is used to encrypt and decrypt the associated document (309),
- an index database (207; 306) configured to store at least one index key (307), associated to at least one index (311) in the index storage (209; 310) and wherein the index key (307) is used to encrypt and decrypt the associated index (311) and
- a user key database (206, 302) configured to store at least one user key (303),
wherein each user key (303) is associated to a plurality of index keys (307) and to a plurality of document keys (305) through using the respective user key (303) to encrypt and decrypt the associated index keys (307) in the index database (207; 306) as well as the associated document keys (305) in the document key database (206; 304),
wherein the search server (203) is configured to extract one or more terms for a search from a requested search query, to decrypt the encrypted index key (307) with the user key (303) which belongs to the user (301) requesting the search query, to search the index storage (209; 310) based on the decrypted index keys (307) for occurrence of the one or more terms from the requested search query, and send a search result to a terminal, wherein said index (311) is encrypted and comprises at least one index tree (500) comprising a sequence of interconnected nodes (502, 512) each encrypted individually, and comprising a reference to another index as well as information (503, 513) relevant to interconnected child nodes.

2. The search system according to claim 1, wherein each node (502, 512) comprises one or more references in the document key database (206; 304) wherein the search result comprises pointers to matching documents (309) on the file storage (208; 308), to other indexes and/or to search metadata such as parts of the index.

3. The search system according to claim 1 or claim 2, comprising an index structure allowing node and level-based decryption, thus only decrypting relevant parts of the index in order to execute a search, wherein each tree node (502) contains index information and references to other nodes, child nodes, and leaf nodes (512) which contain references to matching document(s), other indexes and search metadata.

4. The search system according to any one of claims 1 to 3, wherein the search of the index storage (209; 310) comprises a hierarchically decryption of nodes.

5. The search system according to any one of claims 1 to 4, wherein the search comprises a search within multiple node sequences and/or multiple trees in the index database.

6. The search system according to any one of claims 1 to 5, wherein each node is configured to comprise a datastructure from the group encompassing an array, a list, a hashmap.

7. The search system according to any one of claims 1 to 5, wherein the datastructure of each node is configured to comprise elements from the group encompassing a keyword, parts of a word, a character, a plurality of characters or words, formatted entries, images.

8. The system according to claim 1, comprising an application server (202) to add documents (309) to an existing encrypted document database (208, 308), wherein the application server (202) is configured to forward a document to the search server (203), which is configured to extract a plurality of key terms from the document (309) which is requested to be recorded, to load at least one index key (307) from the index database (306), to decrypt the associated indexes (311) of the index keys (307) to identify the indexes (311) to be updated, to process information from the document to update the indexes (311), to encrypt the updated index (311) as well as the associated index keys (307) and to store them in the index storage (310) as well as the index database (306) respectively.

9. The system according to claim 8, wherein the information from the document to update the indexes (311) is checked to identify the tree nodes of the relevant indexes (311) to be updated, to update the tree nodes including creating new tree nodes (502) and/or new connections (503) to further nodes (502).

10. The system according to claim 8 or 9, wherein the application server (202) encrypts the document (309) to be recorded with the document key (305), encrypts the document key (305) with the user key (303) which belongs to the user requesting to record the document (309), and records the encrypted document in the document storage (309) and the encrypted document key in the document database (308).

## Patentansprüche

1. Ein Suchsystem (200, 300), umfassend:
- eine Speichervorrichtung (205, 206, 207, 208, 209; 302, 304, 306, 308, 310); und
- einen Suchserver (203), der konfiguriert ist, um in der Speichervorrichtung gespeicherte Daten zu suchen,
wobei die Speichervorrichtung (205, 206, 207, 208, 209; 302, 304, 306, 308, 310) umfasst:
- einen Dateispeicher (208; 308), der konfiguriert ist, um mindestens ein Dokument (309) zu speichern,
- einen Indexspeicher (209; 310), der konfiguriert ist, um mindestens einen Index (311) zu speichern, wobei jeder von diesen jeweils mit mindestens einem der mindestens einen Dokumente (309) verknüpft ist,
- eine Dokumentschlüsseldatenbank (206; 304), die konfiguriert ist, um mindestens einen Dokumentschlüssel (305) zu speichern, der dem mindestens einen Dokument (309) in dem Dateispeicher (208; 308) zugeordnet ist, und wobei der Dokumentschlüssel (305) zum Verschlüsseln und Entschlüsseln des zugehörigen Dokuments (309) verwendet wird,
- eine Indexdatenbank (207; 306), die konfiguriert ist, um mindestens einen Indexschlüssel (307) zu speichern, der mindestens einem Index (311) im Indexspeicher (209; 310) zugeordnet ist, und wobei der Indexschlüssel (307) zum Verschlüsseln und Entschlüsseln des zugehörigen Index (311) verwendet wird, und
- eine Benutzerschlüssel-Datenbank (206, 302), die konfiguriert ist, um mindestens einen Benutzerschlüssel (303) zu speichern,
wobei jeder Benutzerschlüssel (303) einer Vielzahl von Indexschlüsseln (307) und einer Vielzahl von Dokumentschlüsseln (305) zugeordnet ist, indem der jeweilige Benutzerschlüssel (303) zum Verschlüsseln und Entschlüsseln der zugehörigen Indexschlüssel (307) in der Indexdatenbank (207; 306) sowie der zugehörigen Dokumentschlüssel (305) in der Dokumentschlüsseldatenbank (206; 304) verwendet wird,
wobei der Suchserver (203) konfiguriert ist, um einen oder mehrere Begriffe für eine Suche aus einer angeforderten Suchanfrage zu extrahieren, um den verschlüsselten Indexschlüssel (307) mit dem Benutzerschlüssel (303) zu entschlüsseln, der zu dem Benutzer (301) gehört, der die Suchanfrage anfordert, um den Indexspeicher (209; 310) basierend auf den entschlüsselten Indexschlüsseln (307) für das Auftreten eines oder mehrerer Begriffe aus der angeforderten Suchanfrage, und Senden eines Suchergebnisses an ein Endgerät, wobei der besagte Index (311) verschlüsselt ist und mindestens einen Indexbaum (500) umfasst, der eine Sequenz von miteinander verbundenen Knoten (502, 512) umfasst, die jeweils einzeln verschlüsselt sind und einen Verweis auf einen anderen Index sowie Informationen (503, 513) umfassen, die für miteinander verbundene Kindknoten relevant sind.

2. Suchsystem nach Anspruch 1, wobei jeder Knoten (502, 512) eine oder mehrere Referenzen in der Dokumentschlüsseldatenbank (206; 304) umfasst, wobei das Suchergebnis Zeiger auf übereinstimmende Dokumente (309) auf dem Dateispeicher (208; 308), auf andere Indizes und/oder auf Suchmetadaten wie Teile des Index umfasst.

3. Suchsystem nach Anspruch 1 oder Anspruch 2, umfassend eine Indexstruktur, die eine knoten- und stufenbasierte Entschlüsselung ermöglicht und somit nur relevante Teile des Index entschlüsselt, um eine Suche durchzuführen, wobei jeder Baumknoten (502) Indexinformationen und Referenzen auf andere Knoten, Kindknoten und Blattknoten (512) enthält, die Referenzen auf übereinstimmende Dokumente, andere Indizes und Suchmetadaten enthalten.

4. Suchsystem nach einem der Ansprüche 1 bis 3, wobei die Suche nach dem Indexspeicher (209; 310) eine hierarchische Entschlüsselung von Knoten umfasst.

5. Suchsystem nach einem der Ansprüche 1 bis 4, wobei die Suche eine Suche innerhalb mehrerer Knotensequenzen und/oder mehrerer Bäume in der Indexdatenbank umfasst.

6. Suchsystem nach einem der Ansprüche 1 bis 5, wobei jeder Knoten konfiguriert ist, um eine Datenstruktur aus der Gruppe zu umfassen, die ein Array, eine Liste, eine Hashmap umfasst.

7. Suchsystem nach einem der Ansprüche 1 bis 5, wobei die Datenstruktur jedes Knotens konfiguriert ist, um Elemente aus der Gruppe zu umfassen, die ein Schlüsselwort, Teile eines Wortes, ein Zeichen, eine Vielzahl von Zeichen oder Wörtern, formatierte Einträge, Bilder umfassen.

8. System nach Anspruch 1, umfassend einen Anwendungsserver (202) zum Hinzufügen von Dokumenten (309) zu einer bestehenden verschlüsselten Dokumentdatenbank (208, 308), wobei der Anwendungsserver (202) konfiguriert ist, um ein Dokument an den Suchserver (203) weiterzuleiten, der konfiguriert ist, um eine Vielzahl von Schlüsselbegriffen aus dem zu erfassenden Dokument (309) zu extrahieren, um mindestens einen Indexschlüssel (307) aus der Indexdatenbank (306) zu laden, die zugehörigen Indizes (311) der Indexschlüssel (307) zu entschlüsseln, um die zu aktualisierenden Indizes (311) zu identifizieren, um Informationen aus dem Dokument zu verarbeiten, um die Indizes (311) zu aktualisieren, den aktualisierten Index (311) sowie die zugehörigen Indexschlüssel (307) zu verschlüsseln und sie im Indexspeicher (310) bzw. der Indexdatenbank (306) zu speichern.

9. System nach Anspruch 8, wobei die Informationen aus dem Dokument zur Aktualisierung der Indizes (311) überprüft werden, um die Baumknoten der zu aktualisierenden relevanten Indizes (311) zu identifizieren, um die Baumknoten zu aktualisieren, einschlieüüsslich der Erstellung neuer Baumknoten (502) und/oder neuer Verbindungen (503) zu weiteren Knoten (502).

10. System nach Anspruch 8 oder 9, wobei der Anwendungsserver (202) das mit dem Dokumentschlüssel (305) aufzuzeichnende Dokument (309) verschlüsselt, den Dokumentschlüssel (305) mit dem Benutzerschlüssel (303) verschlüsselt, der dem Benutzer gehört, der die Aufzeichnung des Dokuments (309) anfordert, und das verschlüsselte Dokument in der Dokumentenablage (309) und den verschlüsselten Dokumentschlüssel in der Dokumentdatenbank (308) speichert.

## Revendications

1. Système de recherche (200, 300) comprenant :
- un dispositif de stockage (205, 206, 207, 208, 209 ; 302, 304, 306, 308, 310) ; et
- un serveur de recherche (203) configuré pour rechercher des données stockées dans le dispositif de stockage,
où le dispositif de stockage (205, 206, 207, 208, 209 ; 302, 304, 306, 308, 310) comprend :
- un stockage de fichiers (208 ; 308) configuré pour stocker au moins un document (309),
- un stockage d'index (209 ; 310) configuré pour stocker au moins un index (311), chacun de ceux associés à au moins un des au moins un document (309),
- une base de données de clés de document (206 ; 304) configurée pour stocker au moins une clé de document (305) associée à au moins un document (309) dans le stockage de fichiers (208 ; 308) et où la clé de document (305) est utilisée pour crypter et décrypter le document (309) associé,
- une base de données d'index (207 ; 306) configurée pour stocker au moins une clé d'index (307), associée à au moins un index (311) dans le stockage d'index (209 ; 310) et où la clé d'index (307) est utilisée pour crypter et décrypter l'index associé (311) et
- une base de données de clés utilisateur (206, 302) configurée pour stocker au moins une clé utilisateur (303),
où chaque clé utilisateur (303) est associée à une pluralité de clés d'index (307) et à une pluralité de clés de document (305) en utilisant la clé utilisateur respective (303) pour crypter et décrypter les clés d'index associées (307) dans la base de données d'index (207 ; 306) ainsi que les clés de document associées (305) dans la base de données de clés de documents (206 ; 304),
où le serveur de recherche (203) est configuré pour extraire un ou plusieurs termes pour une recherche à partir d'une requête de recherche demandée, pour décrypter la clé d'index cryptée (307) avec la clé utilisateur (303) qui appartient à l'utilisateur (301) demandant la requête de recherche, pour rechercher le stockage d'index (209 ; 310) sur la base des clés d'index décryptées (307) pour l'occurrence d'un ou plusieurs termes de la requête de recherche demandée, et envoyer un résultat de recherche à un terminal, où ledit index (311) est crypté et comprend au moins un arbre d'index (500) comprenant une séquence de noeuds interconnectés (502, 512), chacun crypté individuellement et comprenant une référence à un autre index ainsi que à des informations (503, 513) pertinentes aux noeuds enfants connectés.

2. Système de recherche selon la revendication 1, dans lequel chaque noeud (502, 512) comprend une ou plusieurs références dans la base de données de clés de documents (206 ; 304), le résultat de la recherche comprenant des pointeurs vers des documents correspondants (309) sur le stockage de fichiers (208 ; 308), vers d'autres index et/ou des métadonnées de recherche telles que des parties de l'index.

3. Système de recherche selon la revendication 1 ou la revendication 2, comprenant une structure d'index permettant un décryptage à base de noeud et à base de niveau, décryptant ainsi uniquement des parties pertinentes de l'index afin d'exécuter une recherche, dans lequel chaque noeud d'arbre (502) contient des informations d'index et des références à d'autres noeuds, noeuds enfants et noeuds feuilles (512) qui contiennent des références à un ou plusieurs documents correspondants, autres index et métadonnées de recherche.

4. Système de recherche selon l'une quelconque des revendications 1 à 3, dans lequel la recherche du stockage d'index (209 ; 310) comprend un décryptage hiérarchique des noeuds.

5. Système de recherche selon l'une quelconque des revendications 1 à 4, dans lequel la recherche comprend une recherche dans plusieurs séquences de noeuds et/ou plusieurs arbres dans la base de données d'index.

6. Système de recherche selon l'une quelconque des revendications 1 à 5, dans lequel chaque noeud est configuré pour comprendre une structure de données du groupe comprenant un tableau, une liste, une carte de hachage.

7. Système de recherche selon l'une quelconque des revendications 1 à 5, dans lequel la structure de données de chaque noeud est configurée pour comprendre des éléments du groupe comprenant un mot-clé, des parties d'un mot, un caractère, une pluralité de caractères ou de mots, des entrées formatées, des images.

8. Système selon la revendication 1, comprenant un serveur d'application (202) pour ajouter des documents (309) à une base de données de documents cryptés existante (208, 308), dans lequel le serveur d'application (202) est configuré pour transmettre un document au serveur de recherche (203), qui est configuré pour extraire une pluralité de termes clés du document (309) qui doit être enregistré, pour charger au moins une clé d'index (307) de la base de données d'index (306), pour décrypter les index associés (311) des clés d'index (307) pour identifier les index (311) à mettre à jour, pour traiter des informations du document pour mettre à jour les index (311), pour crypter l'index actualisé (311) ainsi que les clés d'index associées (307) et pour les stocker respectivement dans le stockage d'index (310) ainsi que la base de données d'index (306).

9. Système selon la revendication 8, dans lequel les informations du document pour mettre à jour les index (311) sont vérifiées pour identifier les noeuds d'arbre des index (311) à mettre à jour, pour mettre à jour les noeuds d'arbre incluant la création de nouveaux noeuds d'arbre (502) et/ou de nouvelles connexions (503) à d'autres noeuds (502).

10. Système selon la revendication 8 ou 9, dans lequel le serveur d'application (202) crypte le document (309) à enregistrer avec la clé de document (305), crypte la clé de document (305) avec la clé d'utilisateur (303) qui appartient à l'utilisateur demandant l'enregistrement du document (309), et enregistre le document crypté dans le stockage de document (309) et la clé de document cryptée dans la base de données de documents (308).
